# EUROPÄISCHE PATENTSCHRIFT

(11) **EP 2 166 332 B1**
(45) Veröffentlichungstag und Bekanntmachung des Hinweises auf die Patenterteilung: **07.01.2015**
(21) Anmeldenummer: 09011857.1
(22) Anmeldetag: 17.09.2009
(51) Int. Cl.: G01M 17/007

(54) **Verfahren und Vorrichtung zur Spurführung eines Fahrzeugs**
Method and device for steering a vehicle
Procédé et dispositif destinés au guidage d'une trajectoire de véhicule

(30) Priorität: 17.09.2008 DE 102008047749; 20.11.2008 DE 102008058367
(43) Veröffentlichungstag der Anmeldung: 24.03.2010
(73) Patentinhaber: Dürr Assembly Products GmbH, 66346 Püttlingen (DE)
(72) Erfinder: Weisgerber, Rainer, 66793 Saarwellingen (DE)
(74) Vertreter: Wieske, Thilo

(56) Entgegenhaltungen:
- EP-A1- 0 235 333
- EP-A1- 0 577 855
- DE-A1- 3 303 588
- DE-B- 1 281 720

## Beschreibung

Die Erfindung betrifft ein Verfahren zur Spurführung eines Fahrzeugs am Bandende einer Produktionsstraße zur Durchführung von Fahrversuchen auf einem Rollenprüfstand.

Aus der EP 577 855 A1 ist es bekannt, ein Fahrzeug in einem Prüfstand zu stabilisieren gegenüber seitlichen Bewegungen bei der Durchführung von Fahrversuchen. Dabei geht die EP 577 855 A1 von einem Stand der Technik aus bei dem an dem Lenkrad des Fahrzeugs eine Stange befestigt wird, deren anderes Ende außerhalb des Fahrzeugs gelagert ist. Bei einer seitlichen Bewegung des Fahrzeugs erfolgt damit bei diesem dort genannten Stand der Technik ein Lenkradeinschlag, weil die Stange dieser seitlichen Bewegung des Fahrzeugs nicht folgen kann. Diese Lenkbewegung ist in ihrer Richtung gerade so, dass diese der Richtung der seitlichen Bewegung des Fahrzeugs entgegenwirkt. Demgegenüber ist bei dem Gegenstand der EP 577 855 A1 vorgesehen, bei dem Eingriff in die Lenkung zu berücksichtigen, ob eine Bewegung des fahrzeugseitigen Bezugspunktes erfolgt aufgrund einer Bewegung des gesamten Fahrzeugs in der entsprechenden Richtung oder beispielsweise aufgrund einer Rollbewegung des Fahrzeugs um die Fahrzeuglängsachse. Im letzteren Fall würde sich eine Bewegung des fahrzeugseitigen Bezugspunktes ergeben gegenüber dem Fahrzeug(schwerpunkt). In diesem Fall soll keine Lenkkorrektur erfolgen. Eine Lenkkorrektur soll hingegen nur erfolgen, wenn sich das Fahrzeug insgesamt seitlich bewegt. Dazu ist in der EP 577 855 A1 in einer Ausgestaltung vorgesehen, dass ein Bezugspunkt außerhalb des Fahrzeugs definiert wird, indem eine horizontale Stange in der Höhe der Wankachse des Fahrzeugs an einer Wand befestigt ist. Das andere Ende der Stange dient als Bezugspunkt, an dem über ein Gestänge eine weitere Stange angebracht ist, über die Lenkbewegungen des Fahrzeugs ausgeführt werden. Das Gestänge nimmt dabei die Bewegungen des Fahrzeugs auf, die auf Wank- und Rollbewegungen des Fahrzeugs zurückzuführen sind. Seitliche Bewegungen des gesamten Fahrzeugs führen zu einem entsprechenden Einschlag des Lenkrades, so dass dieses seitlich an einer Position im Prüfstand gehalten wird.

Aus der DE 33 03 588 A1 ist es weiterhin bekannt, den Fahrbetrieb auf einem Rollenprüfstand automatisiert durchzuführen. Dazu wird eine Einheit in das Fahrzeug eingebracht, die Aktoren aufweist, über die auf das Gaspedal, das Bremspedal und auch auf die Lenkung eingewirkt werden kann. Der Aktor für die Lenkung wirkt auf das Lenkrad, indem eine Drehbewegung des Aktors umgesetzt wird in eine Drehbewegung des Lenkrades. Um die Reaktionskräfte aufzunehmen, die entstehan, wenn die Aktoren auf die entsprechenden Bedienelemente des Fahrzeugs einwirken, wird die Einheit im Fahrzeug abgestützt. Dazu wird die Einheit gegen den Fahrersitz verspannt. Es ist auch beschrieben, dass anstelle des Fahrersitzes eine Aufnahme für die Einheit in das Fahrzeug eingebaut werden kann, über die die Einheit abgestützt wird.

Aus der US-PS 3,003,363 ist eine Einheit bekannt, die auf das Lenkrad eines Fahrzeugs montiert wird und über die im Sinne einer kabelgeführten Fernbedienung das Lenkrad drehbar ist. Auch diese Einheit weist einen Elektromotor auf, über den ein drehbares Element angetrieben wird. Die Drehung dieses drehbaren Elementes wird auf das Lenkrad übertragen, so dass dadurch das Lenkrad gedreht wird. Auch hier muss die Lenkradgreifeinheit abgestützt werden, um die Reaktionskräfte aufzunehmen. Dazu wird eine Haltestange der Lenkradgreifeinheit durch das Seitenfenster aus dem Fahrzeug herausgeführt und über eine Umlenkung nach unten geführt und dort am Boden des Fahrzeugs befestigt. Das heißt, dass auch hier die Lenkradgreifeinheit am Fahrzeug befestigt wird, um die Reaktionskräfte aufzunehmen.

Aus der EP 235 333 A1 ist es ebenfalls bekannt, über eine motorische Einrichtung Kräfte auf Bedienelemente des Fahrzeugs aufzubringen. Auch hierbei werden die Reaktionskräfte aufgenommen, indem die motorische Einrichtung mit einer Gegenplatte verbunden ist, die am Fahrzeug abgestützt wird.

Beim Stand der Technik wird das Lenkrad unmittelbar durch den Aktor in eine Drehbewegung versetzt, indem ein Antriebselement des Aktors in eine Drehbewegung versetzt wird und diese Drehbewegung auf das Lenkrad übertragen wird.

Derzeit erfolgt eine Funktionsprüfung des Fahrzeugs in definierten Fahrzuständen, indem das Fahrzeug in einen Rollenprüfstand eingebracht wird, in dem die entsprechenden Fahrbedingungen simuliert werden.

Derartige Rollenprüfstände können sowohl als sogenannte Scheitelrollenprüfstände ausgestaltet sein sowie auch als Doppelrollenprüfständen. Bei den Scheitelrollenprüfständen stehen die Räder des Fahrzeugs auf dem obersten Punkt einer Rolle auf, durch deren Drehung bzw. auf das Fahrzeug wirkenden Belastung die Fahrbedingungen simuliert werden. Um zu vermeiden, dass das Fahrzeug dabei von diesem Punkt auf den Rollen des Rollenprüfstandes abrollt, sind sogenannte Halterollen vorhanden, die ebenfalls an den Rädern des Fahrzeugs anliegen. Bei den Doppelrollenprüfständen sind den Fahrzeugrädern zwei Rollen zugeordnet, so dass sich die Fahrzeugräder zwischen den beiden Rollen befinden.

Durch die Simulation der Fahrbedingungen kann es zu seitlichen Bewegungen des Fahrzeugs kommen. Der Amnelderin ist es bekannt, dass die seitlichen Bewegungen ausgeglichen werden, um zu vermeiden, dass die Reifen des Fahrzeugs zu häufigen seitlichen Kontakt mit Anschlagpuffern bekommen. Diese seitlichen Kontakte fuhren zu Abnutzungen des Reifens. Zu diesem Zwecke sitzt derzeit eine Bedienungsperson in dem Fahrzeug, während dieses auf dem Rollenprüfstand geprüft wird. Diese Bedienungsperson muss durch entsprechende Lenkbewegungen die seitlichen Bewegungen des Fahrzeugs ausgleichen.

Der vorliegenden Erfindung liegt die Aufgabe zu Grunde, die Fahrzeugproduktion effizienter zu gestalten.

Diese Aufgabe wird nach der vorliegenden Erfindung durch ein Verfahren gemäß Anspruch 1 gelöst. Dabei ist eine Lenkradgreifeinheit vorhanden, mit der das Lenkrad unmittelbar oder mittelbar gegriffen wird, wobei die Lenkradgreifeinheit seitlich durch ein geöffnetes Fahrzeugfenster in das Fahrzeug hineingreift, wobei die Lenkradgreifeinheit eine stangenförmige Verbindung zwischen einer Halterung der Lenkradgreifeinheit seitlich des Fahrzeugs und einer lenkradseitigen Halterung der Lenkradgreifeinheit darstellt. Die lenkradseitige Halterung der Lenkradgreifeinheit ist drehbar um einen Haltepunkt gelagert, wobei die Lenkradgreifeinheit an der Halterung seitlich des Fahrzeugs ebenfalls drehbar gelagert ist derart, dass die Lenkradgreifeinheit bei Seitenbewegungen des Fahrzeugs den entsprechend gegengesetzten Lenkeinschlägen auf Grund der stangenförmigen Verbindung zwischen der Halterung der Lenkradgreifeinheit seitlich des Fahrzeugs und der lenkradseitigen Halterung der Lenkradgreifeinheit folgt. Die Lenkradgreifeinheit ist weiterhin so gelagert, dass diese Bewegungen des Fahrzeugs in Fahrzeugslängsrichtung sowie in vertikaler Richtung folgt. Nach der vorliegenden Erfindung wird die Länge der stangenförmigen Verbindung zwischen der Halterung der Lenkradgreifeinheit seitlich des Fahrzeugs und der lenkradseitigen Halterung der Lenkradgreifeinheit steuerbar oder regelbar verändert, so dass die Räder des Fahrzeugs zur Durchführung bestimmter Fahrversuche auf definierten Bereichen der Rollen des Rollenprüfstandes in axialer Richtung der Rollen aufstehen.

Vorteilhaft wird es dadurch möglich, dass während des Prüfvorganges keine Bedienungsperson mehr im Fahrzeug sein muss.

Dies erweist sich insofern als vorteilhaft, weil durch die automatisierte Regelung eine schnellere Reaktion und ein schnelleres Eingreifen zur Durchführung der notwendigen Lenkbewegungen möglich ist.

Bei dem Verfahren nach Anspruch 1 bewirkt die Regelabweichung (seitliche Bewegung des Fahrzeugs gegenüber einer Neutralposition auf dem Rollenptüfstand) unmittelbar eine Einstellung der Stellgröße (Lenluadwinkel und damit den Lenkwinkel) derart, dass die Regelabweichung auf Null zurückgeführt wird.

Durch die vorliegende Erfindung wird ein definierter Abstand zwischen einem lenkradseitigen Angriffspunkt der Lenkradgreifeinheit und der Halterung der Lenkradgreifeinheit seitlich des Fahrzeugs eingestellt. Bei einer seitlichen Bewegung des Fahrzeugs bedeutet dies, dass der definierte Abstand beibehalten wird, indem das Lenkrad entsprechend gedreht wird. Das bedeutet aber, dass die Lenkradgreifeinheit sowohl in der Halterung seitlich des Fahrzeugs sowie auch im lenkradseitigen Angriffspunkt drehbar gelagert sein muss.

Diese drehbare Lagerung kann beispielsweise so sein, dass bei einem Angriffspunkt der Lenkradgreifeinheit unmittelbar am Lenkrad in beiden Punkten der Lenkradgreifeinheit (lenkradseitiger Angriffspunkt und Halterung seitlich des Fahrzeugs) eine Drehbarkeit um eine Achse gegeben sein muss, die senkrecht auf der Ebene des Lenkrads steht. Dies kann beispielsweise gewährleistet werden, indem bei einem bestimmten Fahrzeugmodell mit einem bestimmten Lenkrad sichergestellt wird, dass die Höheneinstellung des Lenkrads in einer definierten Position ist (sinnvoller Weise in der obersten Position). Damit ist der Neigungswinkel der Lenkradebene gegen die Vertikale definiert. Mit diesen Parametern kann auch die Lenkradgreifeinheit so montiert werden, dass die Ausrichtung der Lenkradgreifeinheit so vorgenommen wird, dass die beiden genannten Drehachsen dann senkrecht auf dieser Lenkradebene stehen.

Eine Anpassung an unterschiedliche Situationen von Fahrzeugmodellen und Lenkradneigungen kann auch realisiert werden, indem die Lenkradgreifeinheit in der Halterung seitlich des Fahrzeugs um eine Achse drehbar ist, die in horizontaler Richtung orientiert ist und senkrecht auf der Fahrzeuglängsrichtung steht. Damit kann die Lenkradgreifeinheit unterschiedlichen Neigungswinkeln der Lenkradebene gegen die Vertikale angepasst werden.

Es sind grundsätzlich zwei unterschiedliche Betriebsweisen möglich. Bei der einen Betriebsweise wird die Lenkradgreifeinheit bezüglich des Rollenprüfstandes ortsfest montiert. Die Position der Halterung der Lenkradgreifeinheit seitlich des Fahrzeugs muss dann lediglich dem Rollenprüfstand sowie dem jeweiligen Fahrzeugtyp angepasst werden. Im übrigen muss die Lenkradgreifeinheit bei einer solchen Ausgestaltung lediglich den Fahrzeugbewegungen folgen können, die sich bei der laufenden Fahrsimulation auf dem Rollenprüfstand ergeben. Dies können in gewissem Umfang Bewegungen in Fahrzeuglängsrichtung sowie in vertikaler Richtung sein. Bei einer solchen Ausgestaltung ist es von Vorteil, die Halterung der Lenkradgreifeinheit seitlich des Fahrzeugs sowie auch die lenkradseitigen Halterung der Lenkradgreifeinheit jeweils als Kugelgelenkt auszubilden. Die Lenkradgreifeinheit kann dann diesen Fahrzeugbewegungen folgen. Die Bewegungen des Fahrzeugs in seitlicher Richtung sollen durch die Erfindung gerade ausgeglichen werden. Bei der anderen Betriebsweise wird die Lenkradgreifeinheit in Fahrzeuglängsrichtung mit dem Fahrzeug mitgeführt. Dies kann insbesondere dann erfolgen, wenn das Fahrzeug von einer Abstellposition vor dem Rollenprüfstand selbsttätig in den Rollenprüfstand hineinfahren soll und auch wieder aus dem Rollenprüfstand herausfahren soll. Um hier eine Führung des Fahrzeugs zu gewährleisten, ist insbesondere die Halterung der Lenkradgreifeinheit seitlich des Fahrzeugs derart, dass diese lediglich um eine Achse senkrecht zur Lenkradebene drehbar ausgestaltet ist.

Nach der vorliegenden Erfindung wird die Länge der stangenförmigen Verbindung zwischen der Halterung der Lenkradgreifeinheit seitlich des Fahrzeugs und der lenkradseitigen Halterung der Lenkradgreifeinheit steuerbar oder regelbar verändert, so dass die Räder des Fahrzeugs zur Durchführung bestimmter Fahrversuche auf definierten Bereichen der Rollen des Rollenprüfstandes in axialer Richtung der Rollen aufstehen.

Dies erweist sich besonders dann als vorteilhaft, wenn die Rollen des Rollenprüfstandes in Bereichen, die in axialer Richtung der Rollen unterschiedlich sind, auf der Außenmantelfläche der Rollen Oberflächen mit unterschiedlichen Reibbeiwerten zu Rädern eines Fahrzeugs und/oder unterschiedliche Oberflächen zur Simulation unterschiedlicher Fahrbahnoberflächen aufweisen. Indem in axialer Richtung der Rollen Bereiche mit unterschiedlichen Reibbeiwerten oder unterschiedlichen Oberflächen vorgesehen sind, können verschiedene Fahrsituationen simuliert werden abhängig von der seitlichen Positionierung des Fahrzeugs.

Vorteilhaft ist dazu die stangenförmige Verbindung nach der vorliegenden Erfindung so ausgestaltet, dass diese in der Länge veränderbar ist. Durch diese Längenänderung wird das Fahrzeug auf dem Rollenprüfstand in seitlicher Richtung unterschiedlich positioniert. Durch eine entsprechende Steuerung oder Regelung bei der Einstellung der Länge der stangenförmigen Verbindung lässt sich daher erreichen, dass das Fahrzeug seitlich so positioniert wird, dass jeweils bestimmte Fahrbedingungen entsprechend der seitlichen Positionierung des Fahrzeugs durchgeführt werden können.

Die unterschiedlichen Reibbeiwerte können beispielsweise unterschiedliche Bodenhaftung betreffen zur Simulation von vereisten Fahrbahnoberflächen gegenüber anderen Straßenoberflächen. Die unterschiedlichen Straßenoberflächen können beispielsweise Unterschiede zwischen asphaltierten Straßen und Kopfsteinpflaster betreffen.

Bei der Ausgestaltung nach Anspruch 2 stellt wenigstens eine der beiden drehbaren Lagerungen der Lenkradgreifeinheit eine Lagerung mittels eines Kugelgelenks dar.

Diese drehbare Lagerung ist eine weitere vorteilhafte Möglichkeit, wie die Lenkradgreifeinheit gelagert sein kann, so dass diese den Lenkbewegungen des Lenkrades folgen kann auch bei unterschiedlichen Neigungswinkeln der Lenkradebene gegen die Vertikale oder auch bei Fahrzeugbewegungen im Rollenprüfstand in Längsrichtung des Fahrzeugs. Eine solche Bewegung des Fahrzeugs kann bei der Simulation der entsprechenden Fahrbedingungen vorkommen, bei der beilspielsweise auf dem Rollenprüfstand eine Fahrt mit hoher Geschwindigkeit simuliert wird, bei der das Fahrzeug abgebremst wird.

Sofern nur eine der beiden drehbaren Lagerungen eine Lagerung mittels eines Kugelgelenks ist, ist vorteilhaft die andere der Lagerungen nicht nur um die Achse senkrecht zur Lenkradebene drehbar sondern vorteilhaft auch um eine Achse, die zumindest im wesentlichen vertikal orientiert ist.

Wie bereits im Zusammenhang mit Anspruch 1 ausgeführt, eignet sich die Ausführungsform mit zwei als Kugelgelenk ausgestalteten Lagerungen insbesondere für eine ortsfeste Ausgestaltung der Lenkradgreifeinheit.

Bei einer mitgeführten (d.h. mit dem Fahrzeug mitgeführten) Ausgestaltung der Lenkradgreifeinheit ist es insbesondere bei zu fahrenden Kurven von Vorteil, wenn zumindest die lenkradseitige Halterung als Kugelgelenk ausgestaltet ist.

Bei der Ausgestaltung des Verfahrens nach Anspruch 3 greift die Lenkradgreifeinheit das Lenkrad mittelbar, indem ein Greifelement drehfest mit dem Lenkrad verbunden ist und wobei die Lenkradgreifeinheit das Greifelement greift.

Vorteilhaft kann dabei unterschiedlichen Ausstattungsvarianten Rechnung getragen werden. Beispielsweise kann es bei einem Fahrzeugtyp vorkommen, dass anstelle eines serienmäßigen Lenkrades als Sonderausstattung des Fahrzeugs ein Sportlenkrad vorgesehen wird. Um dem Fahrer ein Fahrgefühl einer direkteren Lenkwirkung zu geben, ist das Sportlenkrad durchweg kleiner als ein serienmäßig vorgesehenes Lenkrad des Fahrzeugs.

Es kann dann ein Greifelement vorgesehen werden, das hinsichtlich der Befestigung am Lenkrad an das serienmäßige Lenkrad angepasst ist und ein weiteres Greifelement, das hinsichtlich der Befestigung dem Sportlenkrad angepasst ist. Soweit diese Greifelemente im übrigen hinsichtlich der lenkradseitigen Befestigung der Lenkradgreifeinheit gleich ausgestaltet sind, kann die Lenkradgreifeinheit dann unabhängig von der Fahrzeugausstattung Verwendung finden. Insbesondere bleibt der Proportionalanteil der Regelstrecke unverändert, weil trotz unterschiedlicher Radien der Lenkräder der Radius des Angriffspunktes der Lenkradgreifeinheit von der Drehachse des Lenkrades unverändert bleibt.

Für die Drehbarkeit der Lenkradgreifeinheit gelten bei der Verwendung des Greifelementes die im Zusammenhang mit den Ansprüchen 1 und 2 genannten Bedingungen, die sich auf die Lenkradebene beziehen, dann entsprechend für die Drehebene des Greifelementes.

Bei der Ausgestaltung nach Anspruch 4 ist der Angriffspunkt der Lenkradgreifeinheit an dem Greifelement radial verstellbar bezogen auf den Drehpunkt des Lenkrades.

Dadurch kann der Proportionalanteil der Regelung eingestellt werden. Dieser betrifft das Ausmaß des Lenkeinschlags abhängig von der seitlichen Abweichung des Fahrzeugs. Abhängig von dem radialen Abstand ergibt sich ein unterschiedliches Verhältnis zwischen der seitlichen Abweichung des Fahrzeugs und dem resultierenden Lenkwinkel.

Bei der Ausgestaltung des Verfahrens nach Anspruch 5 erfolgt eine kontrollierte Abschaltung der Fahrsimulation, wenn ein bestimmter Betrag des Lenkradwinkeleinschlags gegenüber der Nullstellung erreicht wird.

Vorteilhaft lässt sich damit die Fahrsimulation abbrechen, wenn nicht mehr gewährleistet werden kann, dass die seitliche Abweichung des Fahrzeugs von einer Normalstellung mit den erreichbaren Stellgrößen der Stellelemente erreicht werden kann.

Beispielsweise kann mittels eines Endschalters ein Signal erzeugt werden, wenn ein bestimmter Betrag des Lenkradwinkeleinschlags gegenüber der Nullstellung erreicht wird.

Vorteilhaft kann damit ein Erreichen eines bestimmten Ausmaßes des Lenkwinkels erreicht werden. Im Weiteren kann dieses Signal beispielsweise entsprechend der Ausgestaltung des Verfahrens nach Anspruch 5 verwendet werden, um die Fahrsimulation kontrolliert abzubrechen.

Bei der Ausgestaltung nach Anspruch 6 ist die Halterung der Lenkradgreifeinheit seitlich des Fahrzeugs derart gelagert, dass diese bei Bewegungen des Fahrzeugs in Längsrichtung des Fahrzeugs entsprechend dieser Fahrzeugbewegung in Fahrzeuglängsrichtung mitgeführt wird.

Damit kann die Lenkradgreifeinheit bereits vor dem Einfahren in den Rollenprüfstand mit dem Fahrzeug verbunden werden. Wenn das Fahrzeug in seitlicher Richtung zum Rollenprüfstand ausgerichtet abgestellt ist, kann damit eine automatische Fahrt des Fahrzeugs in den Rollenprüfstand hinein über die Durchführung der Fahrsimulation bis hin zum Ausfahren des Fahrzeugs aus dem Rollenprüfstand realisiert werden.

Ein weiterer Vorteil besteht darin, dass die Lenkradgreifeinheit damit Bewegungen des Fahrzeugs in Fahrzeugslängsrichtung bei der Durchführung der Fahrsimulation folgen kann. Diese Bewegungen können daraus resultieren, dass eine Fahrt mit hoher Geschwindigkeit simuliert wird, bei der das Fahrzeug abgebremst wird.

Vorteilhaft kann dabei die Lenkradgreifeinheit bereits in einer Abstellposition des Fahrzeugs vor dem Einfahren in den Rollenprüfstand angebracht werden. Das Einfahren in den Rollenprüfstand sowie die Durchführung der Prüfungen und das Ausfahren aus dem Rollenprüfstand kann dabei automatisiert erfolgen. In der Abstellposition nach dem Ausfahren aus dem Rollenprüfstand wird die Lenkradgreifeinheit wieder entfernt. Vorteilhaft wird diese selbsttätige wieder zurückgeführt zur Abstellposition der Fahrzeuge im Einfahrtbereich des Rollenprüfstandes.

Hierbei erweist es sich als vorteilhaft, dass auch während einer eventuellen Wartezeit auf das Freiwerden des Rollenprüfstandes keine Bedienungsperson im Fahrzeug warten muss.

Beispielsweise kann hierzu von einer Leitstelle zur Produktionssteuerung ein Aufforderungssignal an ein in der Einfahrtposition eines Rollenprüfstandes wartendes Fahrzeug übermittelt werden, wenn der Rollenprüfstand von der Leitstelle als frei erkannt wird, wobei abhängig von diesem Aufforderungssignal Steuersignale an die Motor-, die Getriebesteuerung und die Steuerung der Fahrzeugbremse ausgegeben werden, mit denen das Fahrzeug in den Rollenprüfstand bewegt wird. Bei der Einfahrt des Fahrzeugs in den Rollenprüfstand wird eine Steuerung der Seitenbewegung des Fahrzeugs mittels der Lenkradgreifeinheit vorgenommen. Nach Beendigung der Prüfungen auf dem Rollenprüfstand werden Steuersignale an die Motor-, die Getriebesteuerung und die Steuerung der Fahrzeugbremse ausgegeben, mit denen das Fahrzeug aus dem Rollenprüfstand herausgefahren wird, wobei bei der Ausfahrt des Fahrzeugs aus dem Rollenprüfstand eine Steuerung der Seitenbewegung des Fahrzeugs mittels der Lenkradgreifeinheit vorgenommen wird.

Im laufenden Produktionsprozess erfolgt üblicher Weise ohnehin eine Kommunikation zwischen Steuergeräten im Fahrzeug und einer Produktionsleitstelle. Vorteilhaft kann über diese Kommunikation das Fahrzeug veranlasst werden, selbsttätig in den Rollenprüfstand einzufahren, wenn dieser von der Leitstelle als frei erkannt wird.

Für diesen automatisierten Fahrbetrieb des Fahrzeugs ist die Lenkradgreifeinheit vorteilhaft über eine im Bodenbereich, im Wandbereich und/oder im Deckenbereich des Rollenprüfstands befestigte Spurführung geführt.

Vorteilhaft kann damit das Einfahren in den Rollenprüfstand und das Ausfahren aus dem Rollenprüfstand automatisiert werden, weil über die Führung der Lenkradgreifeinheit entsprechende Lenkbewegungen des Fahrzeugs induziert werden, so dass das Fahrzeug dieser Spurführung folgt. Vorteilhaft erstreckt sich diese Spurführung dann vom Einfahrtbereich in den Rollenprüfstand bis in den Abstellbereich hinter dem Rollenprüfstand.

Die Lenkradgreifeinheit kann dabei unmittelbar durch die Fahrzeugbewegung mitgeschleppt werden. Es ist auch möglich, einen separaten motorischen Antrieb zur Bewegung der Lenkradgreifeinheit vorzusehen. Der motorische Antrieb wird dann gesteuert oder geregelt abhängig von einer messtechnischen Erfassung der Fahrzeugposition.

Mit diesem motorischen Antrieb wird auch der automatisierte Fahrbetrieb mit dem selbsttätigen Einfahren des Fahrzeugs aus der Abstellposition vor dem Rollenprüfstand in den Rollenprüfstand hinein, der Durchführung der Prüfungen, dem Ausfahren aus dem Rollenprüfstand in die Abstellposition hinter dem Rollenprüfstand realisierbar. Dies betrifft insbesondere das selbsttätige Zurückführen der Lenkradgreifeinheit nach dem Demontieren im Abstellbereich der Fahrzeuge hinter dem Rollenprüfstand zur Abstellposition der Fahrzeuge vor dem Rollenprüfstand.

Bei der Ausgestaltung des Fahrzeugs nach Anspruch 7 ist die Halterung der Lenkradgreifeinheit seitlich des Fahrzeugs derart gelagert, dass diese bei Bewegungen des Fahrzeugs in vertikaler Richtung entsprechend dieser Fahrzeugbewegung in vertikaler Richtung mitgeführt wird.

Dabei kann diese Halterung mit der Fahrzeugkarosserie verbunden sein, so dass diese Halterung darüber mitgeführt wird. Die Kräfte in Längsrichtung der Lenkradgreifeinheit können dabei dennoch an der seitlichen Wand oder an der Decke bzw. dem Boden abgestützt werden.

Wenn die Halterung nicht entsprechend den Ausgestaltungen nach den Ansprüchen 6 und/oder 7 mitgeführt wird, muss die drehbare Lagerung derart sein, dass die Lenkradgreifeinheit ausreichend Freiheitsgrade hat, um diesen Fahrzeugbewegungen folgen zu können. Diese Fahrzeugbewegungen, die dann nicht in seitlicher Richtung gehen, führen zunächst zu einem Lenkwinkel, durch den das Fahrzeug seitlich bewegt wird gegenüber der vorherigen Nullstellung. Allerdings wird das Fahrzeug bei einem Verbleiben in der neuen Position wieder auf eine (dann neue) Nullstellung eingeregelt. Soweit diese Abweichungen der Nullstellungen aufgrund der Fahrzeugbewegungen in Längsrichtung bzw. auch in vertikaler Richtung gering bleiben, können diese toleriert werden.

Die Lenkradgreifeinheit kann dabei unmittelbar durch die Fahrzeugbewegung mitgeschleppt werden. Es ist auch möglich, einen separaten motorischen Antrieb zur Bewegung der Lenkradgreifeinheit vorzusehen. Der motorische Antrieb wird dann gesteuert oder geregelt abhängig von einer messtechnischen Erfassung der Fahrzeugposition.

Mit diesem motorischen Antrieb wird auch der automatisierte Fahrbetrieb mit dem selbsttätigen Einfahren des Fahrzeugs aus der Abstellposition vor dem Rollenprüfstand in den Rollenprüfstand hinein, der Durchführung der Prüfungen, dem Ausfahren aus dem Rollenprüfstand in die Abstellposition hinter dem Rollenprüfstand realisierbar. Dies betrifft insbesondere das selbsttätige Zurückführen der Lenkradgreifeinheit nach dem Demontieren im Abstellbereich der Fahrzeuge hinter dem Rollenprüfstand zur Abstellposition der Fahrzeuge vor dem Rollenprüfstand.

Bei der Ausgestaltung nach Anspruch 8 ist die stangenförmige Verbindung zwischen der Halterung der Lenkradgreifeinheit seitlich des Fahrzeugs und der lenkradseitigen Halterung der Lenkradgreifeinheit federelastisch in der Länge veränderbar.

Dadurch ergibt sich vorteilhaft eine Dämpfung bei der Lenkungseinstellung gegenüber einer seitlichen Bewegung des Fahrzeugs.

In vergleichsweise einfacher Weise kann dabei ein Endschalter realisiert werden, der im Zusammenhang mit Anspruch 5 beschrieben wurde. Wenn ein bestimmtes Maß des Lenkradeinschlags erreicht ist, wird bei dieser Ausgestaltung die federelastische Lagerung zusammengedrückt oder auseinander gezogen. Der Endschalter kann dann für die beiden Positionen jeweils so angebracht werden, dass bei Erreichen einer gewissen Position beim Zusammendrücken oder Auseinanderziehen der Endschalter betätigt wird.

Vorteilhaft kann bei den in den Patentansprüchen beschriebenen Ausgestaltungen des Verfahrens weiterhin noch eine fahrzeugseitige Kamera vorhanden sein, die auf das Armaturenbrett des Fahrzeugs gerichtet ist und deren Signale einer Auswerteeinheit zugeführt werden.

Vorteilhaft wird es damit möglich, während der simulierten Fahrsituationen die Anzeigeeinrichtungen im Armaturenbrett zu kontrollieren auf die ordnungsgemäße Funktion der Anzeigeeinrichtungen. Dies kann erfolgen, indem das von der Kamera erfasste Bild mit bestimmten Sollzuständen verglichen wird, wobei diese Sollzustände abhängig sein können von der gerade vorliegenden simulierten Fahrsituation und/oder von deren Funktionsprüfungen, die zur Prüfung von Anzeigeeinrichtungen im Armaturenbrett vorgenommen werden. Aus Abweichungen der erkannten Bilder von den Sollzuständen kann auf vorliegenden Funktionsstörungen geschlossen werden.

Ein Ausführungsbeispiel der Erfindung ist in der Zeichnung näher dargestellt. Es zeigt dabei im Einzelnen:
- Figur 1.: eine Prinzipdarstellung einer Lenkradgreifeinheit.
- Figur 2:: eine erste Ausführungsform einer Lenkradgreifeinheit,
- Figur 3:: eine weitere Ausführungsform einer Lenkradgreifeinheit,
- Figur 4:: ein erstes Ausführungsbeispiel für einen Endschalter,
- Figur 5:: ein weiteres Ausführungsbeispiel für einen Endschalter und
- Figur 6:: eine andere Lenkradposition für das Ausführungsbeispiel nach Figur 5.

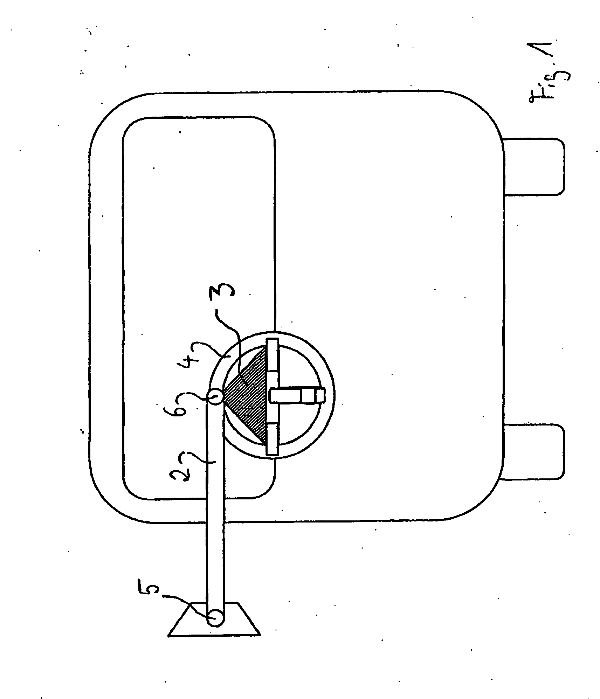

Figur 1 zeigt ein Fahrzeug 1, in das durch das geöffnete Seitenfenster hindurch eine Lenkradgreifeinheit 2 greift. Die Lenkradgreifeinheit 2 ist mit einem Greifelement 3 verbunden. Das Greifelement 3 ist wiederum drehfest mit dem Lenkrad 4 des Fahrzeugs 1 verbunden.

Vorteilhaft ist die Lenkradgreifeinheit 2 in der Neutralstellung der Lenkung (Geradeausfahrt) in der oberen Stellung, so dass ein gleicher Stellbereich der Stellgröße für seitliche Bewegungen des Fahrzeugs in beiden Richtungen vorhanden ist.

Es ist zu sehen, dass die Lenkradgreifeinheit 2 eine Halterung 5 seitlich des Fahrzeugs aufweist sowie eine lenkradseitige Halterung 6. Diese lenkradseitige Halterung 6 wird durch die Verbindung der Lenkradgreifeinheit 2 mit dem Greifelement 3 realisiert.

Sowohl die Halterung 5 wie auch die Halterung 6 sind drehbar gelagert um eine Drehachse, die senkrecht steht auf der Drehebene des Greifelementss 3.

Mit einer solchen Lenkradgreifeinheit werden seitliche Abweichungen des Fahrzeugs selbsttätig ausgeglichen. Bei einer seitlichen Abweichung des Fahrzeugs kommt es zu einer gegengesetzten Lenkbewegung, durch die die seitliche Abweichung wieder ausgeglichen wird.

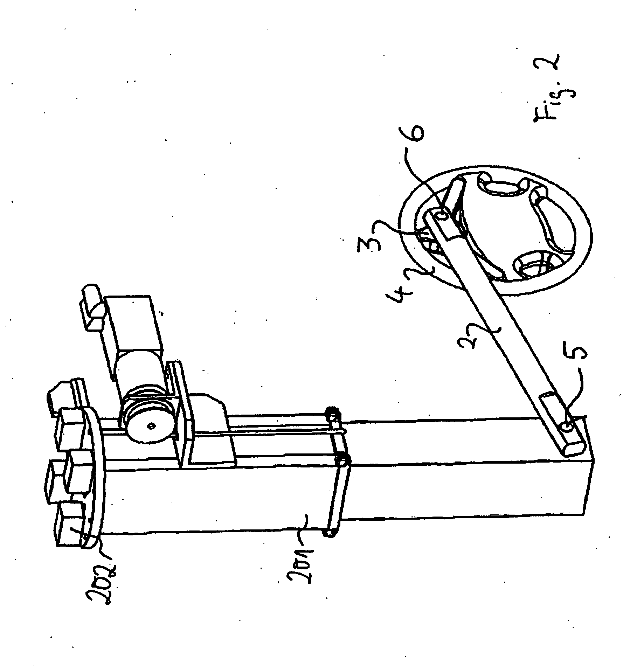

Figur 2 zeigt eine erste Ausführungsform einer Lenkradgreifeinheit 2. Dabei ist die Lenkradgreifeinheit 2 wiederum mit einem Greifelement 3 verbunden, das drehfest mit dem Lenkrad 4 verbunden ist. Die Halterung 5 der Lenkradgreifeinheit seitlich des Fahrzeugs ist über eine Deckenaufhängung 201 nach oben geführt, Die Deckenaufhängung zeigt eine Aufnahme 202, über die die Lenkradgreifeinheit 2 mit der Deckenaufhängung 201 spurgeführt mit dem Fahrzeug mitbewegt werden kann. Diese Bewegung mit dem Fahrzeug kann erfolgen, indem die Deckenaufhängung 201 und die Lenkradgreifeinheit 2 mit dem Fahrzeug mitgeschleppt werden. Diese Bewegung mit dem Fahrzeug kann auch elektromotorisch erfolgen. Es ist noch zu sehen, dass die Deckenaufhängung 201 längenveränderlich ist. Damit können Fahrzeugbewegungen in vertikaler Richtung ausgeglichen werden. Ebenso kann damit die Lenkradgreifeinheit 2 unterschiedlichen Fahrzeugtypen angepasst werden.

Die Lenkradgreifeinheit 2 ist in der Halterung 5 sowie in der Halterung 6 am Greifelement jeweils um eine Achse drehbar gelagert, die senkrecht auf der Drehebene des Greifelementes 3 steht. Dadurch werden die Drehungen des Lenkrades ermöglicht.

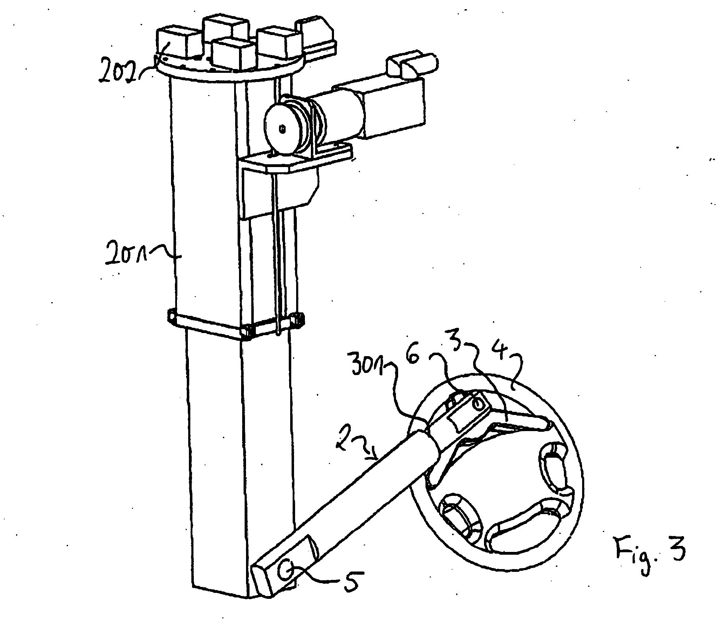

Figur 3 zeigt eine weiteres Ausführungsform einer Lenktadgreifeinheit 2. In diesem Ausführungsbeispiel ist die Lenkradgreifeinheit 2 nochmals in sich um eine Achse drehbar, die längs zur Lenkradgreifeinheit 2 verläuft. Damit können die Drehachsen der Halterungen 5 und 6 nicht-parallel orientiert sein und die Lenkradgreifeinheit kann dennoch den Lenkbewegungen folgen.

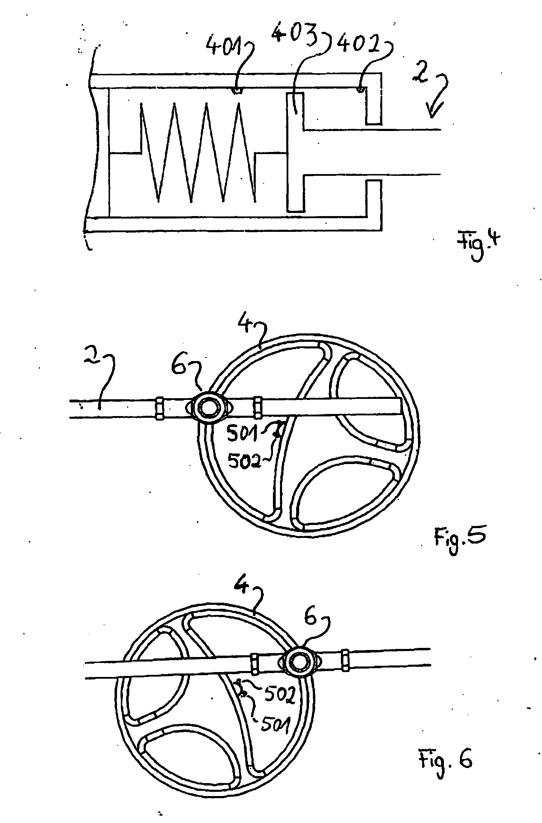

Figur 4 zeigt ein erstes Ausführungsbeispiel für eine Positionierung der Endschalter 401, 402. Nach Erreichen eines Anschlags des Lenkradeinschlags wird bei einer weiteren seitlichen Bewegung die Lenkradgreifeinheit 2 abhängig von der Richtung der seitlichen Bewegung des Fahrzeugs auseinander gezogen oder zusammen gedrückt. Die Platte 403 löst bei einem bestimmten Maß des Auseinanderziehens bzw. Zusammendrückens der Lenkradgreifeinheit 2 einen der Endschalter 401 oder 402 aus, so dass dieser Zustand erkannt und über ein elektrisches Signal des entsprechenden Endschalters 401 oder 402 ausgewertet werden kann.

Es ist eine federelastische Lagerung 404 vorhanden, die die Lenkradgreifeinheit 2 im unbelasteten Zustand in der Mittelstellung zwischen den beiden Endschaltern 401 und 402 hält. Außerdem bewirkt diese federelastische Lagerung 404 eine Dämpfung der Seitenbewegung des Fahrzeugs und der daraus resultierenden Lenkeinschläge.

Figur 5 zeigt ein weiteres Ausführungsbeispiel für einen Endschalter 501, 502. Die Stange der Lenkradgreifeinheit 2 ist über die Halterung 6 hinaus verlängert. Es ist zu sehen, dass bei einer Linksdrehung des Lenkrades 4 die Stange einen Endschalter 501 auslöst, der auf der Mittelstrebe des Lenkrades 4 angebracht ist.

Figur 6 zeigt eine andere Position für das Ausfuhrungsbeispiel nach Figur 5. Hier ist die Auslösung des Endschalters 502 bei einer Rechtsdrehung des Lenkrades 4 zu sehen.

Insgesamt erweist es sich als vorteilhaft, den Lenkeinschlag auf einen Betrag von 90 Grad zu begrenzen. Von dieser Grenze kann noch ein Sicherheitsabstand von 20 Grad eingehalten werden.

## Patentansprüche

1. Verfahren zur Spurführung eines Fahrzeugs am Bandende einer Produktionsstraße zur Durchführung von Fahrversuchen auf einem Rollenprüfstand, wobei durch Lenkbewegungen eine Seitenbewegung des Fahrzeugs auf dem Rollenprüfstand ausgeglichen wird, wobei eine Lenkradgreifeinheit (2) vorhanden ist, mit der das Lenkrad (4) unmittelbar oder mittelbar (3) gegriffen wird, wobei die Lenkradgreifeinheit (2) seitlich durch ein geöffnetes Fahrzeugfenster in das Fahrzeug hineingreift, wobei die Lenkradgreifeinheit (2) eine stangenförmige Verbindung zwischen einer Halterung (5) der Lenkradgreifeinheit (2) seitlich des Fahrzeugs und einer lenkradseitigen Halterung (6) der Lenkradgreifeinheit (2) darstellt, wobei die lenkradseitige Halterung (6) der Lenkradgreifeinheit (2) drehbar um einen Haltepunkt gelagert ist, wobei die Lenkradgreifeinheit (2) an der Halterung (5) seitlich des Fahrzeugs ebenfalls drehbar gelagert ist derart, dass die Lenkradgreifeinheit (2) bei Seitenbewegungen des Fahrzeugs den entsprechend gegengesetzten Lenkeinschlägen auf Grund der stangenförmigen Verbindung zwischen der Halterung (5) der Lenkradgreifeinheit (2) seitlich des Fahrzeugs und der lenkradseitigen Halterung (6) der Lenkradgreifeinheit (2) folgt, wobei die Lenkradgreifeinheit (2) weiterhin so gelagert ist, dass diese Bewegungen des Fahrzeugs in Fahrzeugslängsrichtung sowie in vertikaler Richtung folgt,
**dadurch gekennzeichnet, dass** die Länge der stangenförmigen Verbindung zwischen der Halterung (5) der Lenkradgreifeinheit (2) seitlich des Fahrzeugs und der lenkradseitigen Halterung (6) der Lenkradgreifeinheit (2) steuerbar oder regelbar verändert wird, so dass die Räder des Fahrzeugs zur Durchführung bestimmter Fahrversuche auf definierten Bereichen der Rollen des Rollenprüfstandes in axialer Richtung der Rollen aufstehen.

2. Verfahren nach Anspruch 1,
**dadurch gekennzeichnet, dass** wenigstens eine der beiden drehbaren Lagerungen (5, 6) der Lenkradgreifeinheit (2) der stangenförmigen Verbindung eine Drehbeweglichkeit in der drehbaren Lagerung (5, 6) nach Art eines Kugelgelenks ermöglicht.

3. Verfahren nach Anspruch 1 oder 2,
**dadurch gekennzeichnet, dass** die Lenkradgreifeinheit (2) das Lenkrad (4) mittelbar greift, indem ein Greifelement (3) drehfest mit dem Lenkrad (4) verbunden ist und wobei die Lenkradgreifeinheit (2) das Greifelement (3) greift.

4. Verfahren nach Anspruch 3,
**dadurch gekennzeichnet**, der Angriffspunkt der Lenkradgreifeinheit (2) an dem Greifelement (3) radial verstellbar ist bezogen auf den Drehpunkt des Lenkrades (4).

5. Verfahren nach einem der Ansprüche 1 bis 4,
**dadurch gekennzeichnet, dass** eine kontrollierte Abschaltung der Fahrsimulation erfolgt, wenn ein bestimmter Betrag des Lenkradwinkeleinschlags gegenüber der Nullstellung erreicht wird.

6. Verfahren nach einem der Ansprüche 1 bis 5,
**dadurch gekennzeichnet, dass** die Halterung (5) der Lenkradgreifeinheit (2) seitlich des Fahrzeugs derart gelagert ist, dass diese bei Bewegungen des Fahrzeugs in Längsrichtung des Fahrzeugs entsprechend dieser Fahrzeugbewegung in Fahrzeuglängsrichtung mitgeführt wird (202).

7. Verfahren nach einem der Ansprüche 1 bis 6,
**dadurch gekennzeichnet, dass** die Halterung (5) der Lenkradgreifeinheit (2) seitlich des Fahrzeugs derart gelagert ist, dass diese bei Bewegungen des Fahrzeugs in vertikaler Richtung entsprechend dieser Fahrzeugbewegung in vertikaler Richtung mitgeführt wird (201).

8. Verfahren nach einem der Ansprüche 1 bis 7,
**dadurch gekennzeichnet, dass** die stangenförmige Verbindung zwischen der Halterung (5) der Lenkradgreifeinheit (2) seitlich des Fahrzeugs und der lenkradseitigen Halterung (6) der Lenkradgreifeinheit (2) federelastisch in der Länge veränderbar ist.

## Claims

1. Method of steering a vehicle at the end of the assembly line for the purpose of performing drive tests on a roller-type dynamometer, a sideways movement of the vehicle on the roller-type dynamometer being offset by steering movements, a steering-wheel engaging unit (2) being provided with which the steering wheel (4) is engaged directly or indirectly (3), the steering-wheel engaging unit (2) reaching from the side of the vehicle thereinto through an open vehicle window, the steering-wheel engaging unit (2) forming a rod-like connection between a mounting (5) at the side of the vehicle for the steering-wheel engaging unit (2) and a mounting (6) on the steering-wheel side for the steering-wheel engaging unit (2), the mounting (6) on the steering-wheel side for the steering-wheel engaging unit (2) being supported rotatably about a support point, and, at the mounting (5) to the side of the vehicle, the steering-wheel engaging unit (2) being likewise supported rotatably in such a manner that, in the event of sideways movements of the vehicle, the steering-wheel engaging unit (2) follows the correspondingly counter-directional steering-wheel motion on account of the rod-like connection between the mounting (5) at the side of the vehicle for the steering-wheel engaging unit (2) and the mounting (6) on the steering-wheel side for the steering-wheel engaging unit (2), the steering-wheel engaging unit (2) furthermore being supported in such a manner that it follows vehicle movements in the vehicle's longitudinal direction and in the vertical direction.
**characterised in that** the length of the rod-like connection between the mounting (5) at the side of the vehicle for the steering-wheel engaging unit (2) and the mounting (6) on the steering-wheel side for the steering-wheel engaging unit (2) is varied by means of an open- or closed-loop control system in such a manner that, for the performance of certain drive tests, the vehicle wheels stand on defined areas of the rollers, as seen in the axial direction thereof, of the roller-type dynamometer.

2. Method according to claim 1,
**characterised in that** at least one of the two rotatable supports (5, 6) for the steering-wheel engaging unit (2) permits ball-bearing-type rotary motion of the rod-like connection in the rotatable support (5, 6).

3. Method according to either of claims 1 or 2,
**characterised in that** the steering-wheel engaging unit (2) engages the steering wheel (4) indirectly **in that** an engaging member (3) is connected co-rotationally with the steering wheel (4) and the steering-wheel engaging unit (2) engages the engaging member (3).

4. Method according to claim 3,
**characterised in that** the point at which the steering-wheel engaging unit (2) engages the engaging member (3) is radially adjustable relative to the centre of rotation of the steering wheel (4).

5. Method according to any one of claims 1 to 4,
**characterised in that** a controlled driving-simulation shutoff occurs if the steering angle reaches a defined size relative to the zero-degree position.

6. Method according to any one of claims 1 to 5,
**characterised in that** the mounting (5) for the steering-wheel engaging unit (2) is supported at the side of the vehicle in such a manner that, if the vehicle moves in the vehicle's longitudinal direction, the steering-wheel engaging unit is moved, in sync with this vehicle movement, together with the vehicle in the longitudinal direction thereof (202).

7. Method according to any one of claims 1 to 6,
**characterised in that** the mounting (5) for the steering-wheel engaging unit (2) is supported at the side of the vehicle in such a manner that, if the vehicle moves vertically, the steering-wheel engaging unit (2) is moved, in sync with this vehicle movement, vertically (201) together with the vehicle.

8. Method according to any one of claims 1 to 7,
**characterised in that** the length of the rod-like connection between the mounting (5) at the side of the vehicle for the steering-wheel engaging unit (2) and the mounting (6) on the steering-wheel side for the steering-wheel engaging unit (2) is adjustable by spring-elastic means.

## Revendications

1. Procédé pour le guidage de la trajectoire d'un véhicule en bout de chaîne de production en vue de réaliser des essais de conduite sur un banc d'essai à rouleaux, un déplacement latéral du véhicule sur le banc d'essai à rouleaux étant compensé par des mouvements du volant, une unité de préhension du volant (2) étant prévue à l'aide de laquelle le volant (4) est saisi directement ou indirectement (3), l'unité de préhension du volant (2) agissant dans le véhicule en pénétrant par le côté à travers une fenêtre ouverte du véhicule, l'unité de préhension du volant (2) formant une liaison en forme de tige entre un support (5) de l'unité de préhension du volant (2) situé sur le côté du véhicule et un support (6) de l'unité de préhension du volant (2) situé du côté du volant, le support (6) de l'unité de préhension du volant (2) situé du côté du volant étant logé pivotant autour d'un point d'appui, l'unité de préhension du volant (2), au niveau du support (5) situé sur le côté du véhicule, étant également logée pivotante de sorte que l'unité de préhension du volant (2), en cas de mouvement latéraux du véhicule, suit des braquages correspondants opposés en raison de la liaison en forme de tige entre le support (5) de l'unité de préhension du volant (2) situé sur le côté du véhicule et le support (6) de l'unité de préhension du volant (2) situé du côté du volant, l'unité de préhension du volant (2) étant en outre logée de telle sorte qu'elle suive les mouvements du véhicule dans la direction longitudinale du véhicule ainsi que dans la direction verticale, **caractérisé en ce que** la longueur de la liaison en forme de tige entre le support (5) de l'unité de préhension du volant (2) situé sur le côté du véhicule et le support (6) de l'unité de préhension du volant (2) situé du côté du volant peut être modifiée de façon commandée ou réglable, de sorte que, pour la réalisation de certains essais de conduites, les roues du véhicule reposent sur des zones définies, dans la direction axiale des rouleaux, des rouleaux du banc d'essai à rouleaux.

2. Procédé selon la revendication 1, **caractérisé en ce qu'**au moins un des deux logements pivotants (5, 6) de l'unité de préhension du volant (2) permet à la liaison en forme de tige un mouvement de rotation dans le logement pivotant (5, 6) à la façon d'un joint à rotule.

3. Procédé selon la revendication 1 ou 2, **caractérisé en ce que** l'unité de préhension du volant (2) saisie indirectement le volant (4), un élément de préhension (3) étant pour cela fixé bloqué en rotation au volant (4) et l'unité de préhension du volant (2) saisissant l'élément de préhension (3).

4. Procédé selon la revendication 3, **caractérisé en ce que** le point de saisie de l'unité de préhension du volant (2) sur l'élément de préhension (3) peut être réglé radialement par rapport au point de rotation du volant (4).

5. Précédé selon l'une des revendications 1 à 4, **caractérisé en ce qu'**une interruption contrôlée de la simulation de conduite est réalisée lorsqu'une certaine valeur de l'angle de braquage du volant par rapport à la position neutre est atteinte.

6. Procédé selon l'une des revendications 1 à 5, **caractérisé en ce que** le support (5) de l'unité de préhension du volant (2) situé sur le côté du véhicule est logé de telle sorte que, lors de mouvements du véhicule dans la direction longitudinale du véhicule, ledit support est entraîné (202) dans la direction longitudinale du véhicule de façon correspondante à ce mouvement du véhicule.

7. Procédé selon l'une des revendications 1 à 6, **caractérisé en ce que** le support (5) de l'unité de préhension du volant (2) situé sur le côté du véhicule est logé de telle sorte que, lors de mouvements du véhicule en direction verticale, ledit support est entraîné (201) en direction verticale de façon correspondante à ce mouvement du véhicule.

8. Procédé selon l'une des revendications 1 à 7, **caractérisé en ce que** la longueur de la liaison en forme de tige entre le support (5) de l'unité de de préhension du volant (2) situé sur le côté du véhicule et le support (6) de l'unité de préhension du volant (2) situé du côté du volant peut être modifiée de façon élastique.
